# EUROPÄISCHE PATENTANMELDUNG

(11) **EP 0 725 251 A1**
(43) Veröffentlichungstag der Anmeldung: **07.08.1996**
(21) Anmeldenummer: 96100110.4
(22) Anmeldetag: 05.01.1996
(51) Int. Cl.: F23D 14/22, F23D 14/66

(54) **Verfahren und Vorrichtung zum Verbrennen von gasförmigem Brennstoff**

(30) Priorität: 31.01.1995 DE 19502976
(71) Anmelder: LBE BEHEIZUNGSEINRICHTUNGEN GMBH, D-42389 Wuppertal (DE)
(72) Erfinder: Freieck, Paul, D-42389 Wuppertal (DE)
(74) Vertreter: Harlacher, Mechthild

(57) **Zusammenfassung**

Ein Teil des Brennstoffs wird abgezweigt und der Verbrennungsluft zugeführt. Das so gebildete Gemisch wird sodann auf Zündtemperatur vorgewärmt, wobei der abgezweigte Teil des Brennstoffs im wesentlichen flammenlos oxidiert. Dies geschieht bei einer Temperatur weit unter 1.400 °C. Dabei steigt die Temperatur sprunghaft an, und es vermindert sich der Sauerstoffanteil. Auch entsteht nur sehr wenig NOₓ. Die anschließende Verbrennung des verbliebenen Brennstoffs läuft ebenfalls bei niedriger Verbrennungstemperatur ab, so daß insgesamt nur sehr wenig NOₓ gebildet wird. Zur Vorwärmung dienen die Verbrennungsabgase.

## Beschreibung

Die Erfindung betrifft ein Verfahren und eine Vorrichtung zum Verbrennen von gasförmigem Brennstoff unter Vorwärmung der Verbrennungsluft.

Derartige Verfahren und Vorrichtungen sind aus der Praxis bekannt.

Der Erfindung liegt die Aufgabe zugrunde, die NOₓ-Bildung zu vermindern.

Zur Lösung dieser Aufgabe ist das Verfahren nach der Erfindung dadurch gekennzeichnet,
- daß ein Teil des Brennstoffs abgezweigt und in überstöchiometrischem Verhältnis mit der Verbrennungsluft vor deren Vorwärmung gemischt wird,
- daß die Verbrennungsluft zusammen mit dem abgezweigten Teil des Brennstoffs auf eine Temperatur vorgewärmt wird, bei der eine im wesentlichen flammenlose Oxidation des abgezweigten Teils des Brennstoffs stattfindet, und
- daß das so entstandene Gemisch aus Verbrennungsluft und Oxidationsprodukten mit dem verbliebenen Teil des Brennstoffs zu dessen Oxidation zusammengeführt wird.

Es wurde gefunden, daß diese Maßnahmen zu einer drastischen Minderung der NOₓ-Entstehung führen, und zwar zu einer Verminderung um mindestens 40 %, verglichen mit einer konventionellen zweistufigen Verbrennung.

Bei einer solchen zweistufigen Verbrennung wird dem Brennstoff in der ersten Stufe nur ein geringer Teil der Verbrennungsluft zugeführt. Die erste Stufe arbeitet also stark unterstöchiometrisch. Erst in der zweiten Stufe wird der teilverbrannte Brennstoff mit dem Hauptteil der Verbrennungsluft zusammengeführt.

Demgegenüber arbeitet die Erfindung nach einem völlig anderem Prinzip. Ein Teil des Brennstoffs wird der Verbrennungsluft beigemischt und im Zuge der Vorwärmung im wesentlichen flammenlos oxidiert. Diese Reaktion erfolgt bei einer Temperatur weit unterhalb von 1.400 °C. Daraus resultiert eine äußerst geringe NOₓ-Konzentration in der Verbrennungsluft. Außerdem vermindert sich der Sauerstoffanteil der Verbrennungsluft vor der Zusammenführung mit dem verbliebenen Brennstoff. Dies führt zu niedrigen Verbrennungstemperaturen bzw. zu einer geringen Reaktionskinetik des anschließenden Verbrennungsablaufs, woraus sehr geringe NOₓ-Konzentrationen der Verbrennungsabgase resultieren.

Die Verhältnisse sind vergleichbar mit der konventionellen Abgasrückführung, bei der der Verbrennungsluft Verbrennungsabgase beigemischt werden. Allerdings enthält das dabei entstehende Gemisch sehr viel mehr NOₓ, als es nach der Erfindung der Fall ist, und zwar deshalb, weil die Abgasrückführung mit Verbrennungsabgasen arbeitet, die bei Temperaturen oberhalb von 1.400 °C entstehen. Erfindungsgemäß hingegen werden die Oxidationsprodukte des abgezweigten Teils des Brennstoffs innerhalb der Verbrennungsluft erzeugt, und zwar, wie bereits erwähnt, durch im wesentlichen flammenlose Oxidation, die bei Temperaturen weit unterhalb von 1.400 °C stattfindet.

Im Vergleich mit der konventionellen Abgasrückführung ergibt sich durch die erfindungsgemäßen Maßnahmen ein weiterer vorteilhafter Effekt, nämlich eine sprunghafte Temperaturerhöhung der Verbrennungsluft. Je Prozent an umgesetztem Sauerstoff beträgt der Temperatursprung 100 K.

Ganz besonders vorteilhafte Ergebnisse werden erzielt, wenn der Brennstoff in einer Menge abgezweigt wird, die mit der Verbrennungsluft ein Gemisch ergibt, welches bei Raumtemperatur (20 °C) nicht zündfähig ist, wobei das Gemisch vorzugsweise eine Luftzahl von mindestes 2 hat.

Die Vorwärmung des aus dem abgezweigten Teil des Brennstoffs und der Verbrennungsluft gebildeten Gemischs kann grundsätzlich beliebig erfolgen, nämlich an Wärmetauschflächen, die in irgendeiner Weise beheizt werden. Ganz besonders vorteilhaft ist es, das Gemisch durch die Verbrennungsabgase vorzuwärmen.

Der Brenner nach der Erfindung umfaßt eine Brennkammer, eine zur Brennkammer führende Gasleitung, eine zur Brennkammer führende Luftleitung und eine Einrichtung zum Vorwärmen der Verbrennungsluft. Er ist gekennzeichnet durch eine Verbindungsleitung, die von der Gasleitung abzweigt und stromauf der Einrichtung zum Vorwärmen der Verbrennungsluft in der Luftleitung mündet, wobei die Verbindungsleitung vorzugsweise ein Steuerventil zum Einstellen der abgezweigten Teilmenge des Brennstoffs enthält.

In wesentlicher Weiterbildung der Erfindung wird vorgeschlagen, daß die Einrichtung zum Vorwärmen der Verbrennungsluft ein mit den Verbrennungsabgasen beaufschlagter Rekuperator ist. Die Anwendung der Erfindung auf Rekuperatorbrenner ist deshalb besonders vorteilhaft, weil nur geringfügige konstruktive Maßnahmen erforderlich sind, nämlich die Anordnung der vorzugsweise ventilgesteuerten Verbindungsleitung zwischen der Gasleitung und der Luftleitung. Daher besteht auch die Möglichkeit, bereits vorhandene Rekuperatorbrenner mit geringfügigen Mitteln umzurüsten.

Als erfindungswesentlich offenbart gelten auch solche Kombinationen und Unterkombinationen der erfindungsgemäßen Merkmale, die von den beiliegenden Ansprüchen abweichen.

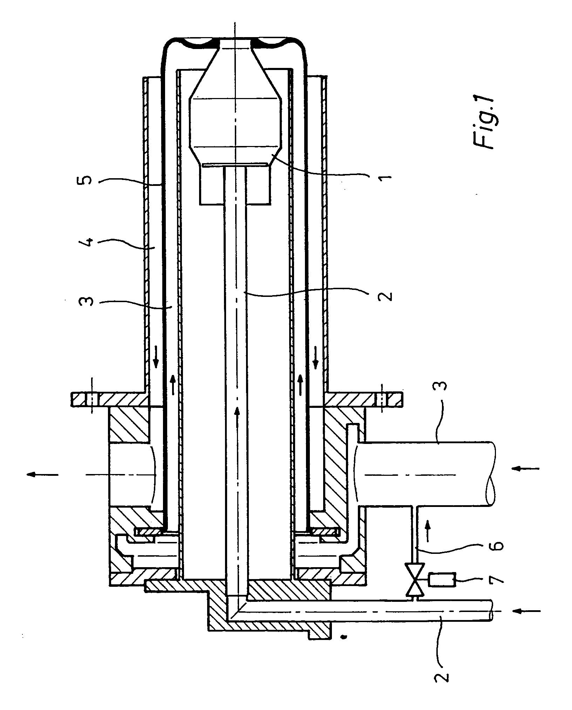

Die Erfindung wird im folgenden anhand eines bevorzugten Ausführungsbeispiels im Zusammenhang mit der beiliegenden Zeichnung näher erläutert. Die einzige Figur zeigt einen schematischen Axialschnitt durch einen Rekuperatorbrenner nach der Erfindung.

Der Brenner weist eine Brennkammer 1 auf, die mit einer Gasleitung 2 und einer Luftleitung 3 in Verbindung steht. Ferner ist eine Abgasleitung 4 vorgesehen, wobei ein Rekuperator 5 zwischen der Abgasleitung 4 und der Luftleitung 3 angeordnet ist.

Stromauf des Rekuperators 5 erstreckt sich eine Verbindungsleitung 6 zwischen der Gasleitung 2 und der Luftleitung 3. Die Verbindungsleitung 6 enthält ein Steuerventil 7, das vorzugsweise als Magnetventil ausgebildet ist.

Durch die Verbindungsleitung 6 wird ein Teil des gasförmigen Brennstoffs aus der Gasleitung 2 abgezweigt und in die Luftleitung 3 gefördert. Das dabei in der Luftleitung 3 entstehende Gemisch ist bei Zimmertemperatur (20 °C) nicht zündfähig. Seine Luftzahl ist größer als 2. Das Gemisch wird durch den Rekuperator 5 auf Zündtemperatur vorgewärmt. Dabei erfolgt eine im wesentlichen flammenlose Oxidation des im Gemisch enthaltenden Brennstoffs, und zwar bei einer Temperatur, die weit unter 1.400 °C liegt. Bei dieser Temperatur entsteht sehr wenig NOₓ. Gleichzeitig erhöht sich sprunghaft die Temperatur des aus Oxidationsprodukten und Verbrennungsluft bestehenden Gemisches.

Dieses Gemisch ist nicht nur NOₓ-arm, sondern auch sauerstoffarm. Wenn es daher in der Brennkammer 1 mit dem verbliebenen Brennstoff zusammengeführt wird, ergibt sich dort eine Verbrennung mit niedrigen Verbrennungstemperaturen bzw. geringer Reaktionskinetik. Bei der Verbrennung in der Brennkammer 1 wird daher ebenfalls sehr wenig NOₓ erzeugt.

Bei Versuchen wurde in den aus der Abgasleitung 4 austretenden Verbrennungsabgasen NOₓ-Gehalte von 65 ppm bei einer Ofenraumtemperatur von 1120°C ermittelt.

Im Rahmen der Erfindung sind durchaus Abwandlungsmöglichkeiten gegeben. So ist die Erfindung nicht auf die dargestellte Impulsbrenner-Bauart beschränkt. Auch läßt sich das erfindungsgemäße Verfahren mit anderen als Rekuperatorbrennern durchführen, solange eine ausreichende Vorwärmung der Verbrennungsluft gewährleistet ist.

## Patentansprüche

1. Verfahren zum Verbrennen von gasförmigem Brennstoff unter Vorwärmung der Verbrennungsluft,
**dadurch gekennzeichnet**,
- daß ein Teil des Brennstoffs abgezweigt und in überstöchiometrischem Verhältnis mit der Verbrennungsluft vor deren Vorwärmung gemischt wird,
- daß die Verbrennungsluft zusammen mit dem abgezweigten Teil des Brennstoffs auf eine Temperatur vorgewärmt wird, bei der eine im wesentlichen flammenlose Oxidation des abgezweigten Teils des Brennstoffs stattfindet, und
- daß das so entstandene Gemisch aus Verbrennungsluft und Oxidationsprodukten mit dem verbliebenen Anteil des Brennstoffs zu dessen Oxidation zusammengeführt wird.

2. Verfahren nach Anspruch 1, dadurch gekennzeichnet, daß der Brennstoff in einer Menge abgezweigt wird, die mit der Verbrennungsluft ein Gemisch ergibt, welches bei Raumtemperatur (20 °C) nicht zündfähig ist.

3. Verfahren nach Anspruch 2, dadurch gekennzeichnet, daß das aus dem abgezweigten Teil des Brennstoffs und der Verbrennungsluft gebildete Gemisch eine Luftzahl von mindestens 2 hat.

4. Verfahren nach einem der Ansprüche 1 bis 3, dadurch gekennzeichnet, daß das aus dem abgezweigten Teil des Brennstoffs und der Verbrennungsluft gebildete Gemisch durch die Verbrennungsabgase vorgewärmt wird.

5. Brenner für gasförmige Brennstoffe mit
- einer Brennkammer (1),
- einer zur Brennkammer (1) führenden Gasleitung (2),
- einer zur Brennkammer (1) führenden Luftleitung (3) und
- einer Einrichtung zum Vorwärmen der Verbrennungsluft,
**gekennzeichnet durch**
eine Verbindungsleitung (6), die von der Gasleitung (2) abzweigt und stromauf der Einrichtung zum Vorwärmen der Verbrennungluft in der Luftleitung (3) mündet.

6. Brenner nach Anspruch 5, dadurch gekennzeichnet, daß die Verbindungsleitung (6) ein Steuerventil (7) enthält.

7. Brenner nach Anspruch 6 oder 7, dadurch gekennzeichnet, daß die Einrichtung zum Vorwärmen der Verbrennungsluft ein mit den Verbrennungsabgasen beaufschlagter Rekuperator (5) ist.
